(19) **Europäisches Patentamt**

**European Patent Office**

**Office européen des brevets**

(11) **EP 0 983 188 B1**

(12) **EUROPÄISCHE PATENTSCHRIFT**

(45) Veröffentlichungstag und Bekanntmachung des Hinweises auf die Patenterteilung:
**06.12.2000 Patentblatt 2000/49**

(21) Anmeldenummer: **99915448.7**

(22) Anmeldetag: **06.05.1999**

(51) Int Cl.⁷: **B64C 3/46**, B63B 1/24, B64C 3/30

(86) Internationale Anmeldenummer:
**PCT/CH99/00188**

(87) Internationale Veröffentlichungsnummer:
**WO 99/61313 (02.12.1999 Gazette 1999/48)**

(54) **ADAPTIVER PNEUMATISCHER FLÜGEL FÜR STARRFLÜGEL-FLUGGERÄTE**

ADAPTIVE PNEUMATIC WINGS FOR FLYING DEVICES WITH FIXED WINGS

AILES ADAPTATIVES PNEUMATIQUES POUR APPAREILS VOLANTS A VOILURE FIXE

(84) Benannte Vertragsstaaten:
**AT CH DE ES FI FR GB IT LI SE**

(30) Priorität: **25.05.1998 CH 113898**

(43) Veröffentlichungstag der Anmeldung:
**08.03.2000 Patentblatt 2000/10**

(73) Patentinhaber: **Prospective Concepts AG**
**8702 Zollikon (CH)**

(72) Erfinder:
• **TO, Frederick, E.**
**CH-4955 Gondiswil (CH)**

• **KAMMER, Res**
**CH-3997 Bellwald (CH)**

(74) Vertreter: **Salgo, Reinhold Caspar, Dr.**
**Rütistrasse 103**
**8636 Wald (CH)**

(56) Entgegenhaltungen:
WO-A-98/03398     DE-C- 680 525
US-A- 3 047 257     US-A- 4 349 169
US-A- 4 899 284

**Beschreibung**

Die vorliegende Erfindung bezieht sich auf einen pneumatischen, d.h. mit Druckluft beaufschlagten und durch gezielte Einwirkung von Druckluft in seiner Form veränderbaren, sog. adaptiven Flügel nach dem Oberbegriff des Patentanspruches 1. Pneumatische Flügel an sich wurden verschiedene vorgeschlagen und sind bekannt, der der vorliegenden Erfindung nächstliegende aus WO 98/03398 der gleichen Anmelderin.

Dieser ist als rein pneumatisches Drucksystem aufgebaut, wo Druckspannungen auf die äusseren Oberflächen wirken, die ihrerseits durch textile Stege verbunden sind, in denen Zugspannungen herrschen. Aufgrund der anwendbaren Drücke im Inneren eines solchen bekannten Flügels, ist die Flächenbelastung und damit die Tragkraft beschränkt; die durch den Druck ermöglichten Zugspannungen in der Aussenhaut und den Stegen limitierten auch die Torsionssteifigkeit des bekannten Flügels. Zudem ist die Verformbarkeit des Flügels begrenzt.

Die Aufgabe, die durch die vorliegende Erfindung gelöst werden soll, besteht einerseits in der Schaffung eines pneumatischen Flügels mit vorgegebenem Profil und einer bestimmten Auftriebskennzahl $c_A$; anderseits soll das Flügelprofil als Ganzes oder teilweise durch den Einsatz von druckluftbeaufschlagten Elementen modifiziert und hinsichtlich der geflogenen Geschwindigkeit optimiert werden, wodurch der nutzbare Geschwindigkeitsbereich also insgesamt vergrössert wird. Ferner soll die Tragkraft erhöht und die Torsionssteifigkeit verbessert werden.

Die Lösung der gestellten Aufgabe ist wiedergegeben im kennzeichnenden Teil des Patentanspruches 1 hinsichtlich der Hauptmerkmale der Vorrichtung und in den Patentansprüchen 2 bis 15 hinsichtlich weiterer vorteilhafter und kennzeichnender Merkmale.

Anhand der beigefügten Zeichnung wird die Erfindung näher erläutert. Es zeigen

Fig. 1    ein erstes Ausführungsbeispiel in gestreckter Form und im Querschnitt,

Fig. 2    eine perspektivische Ansicht eines konstruktiven Merkmals,

Fig. 3    das erste Ausführungsbeispiel in gewölbter Form im Querschnitt,

Fig. 4    ein zweites Ausführungsbeispiel in gestreckter Form im Querschnitt,

Fig. 5    das zweite Ausführungsbeispiel in gewölbter Form im Querschnitt,

Fig. 6    eine perspektivische Ansicht eines weiteren konstruktiven Merkmals,

Fig. 7    ein Detail des Flügels im gestreckten Zustand im Querschnitt.

Fig. 8    ein Detail des Flügels im gewölbten Zustand im Querschnitt.

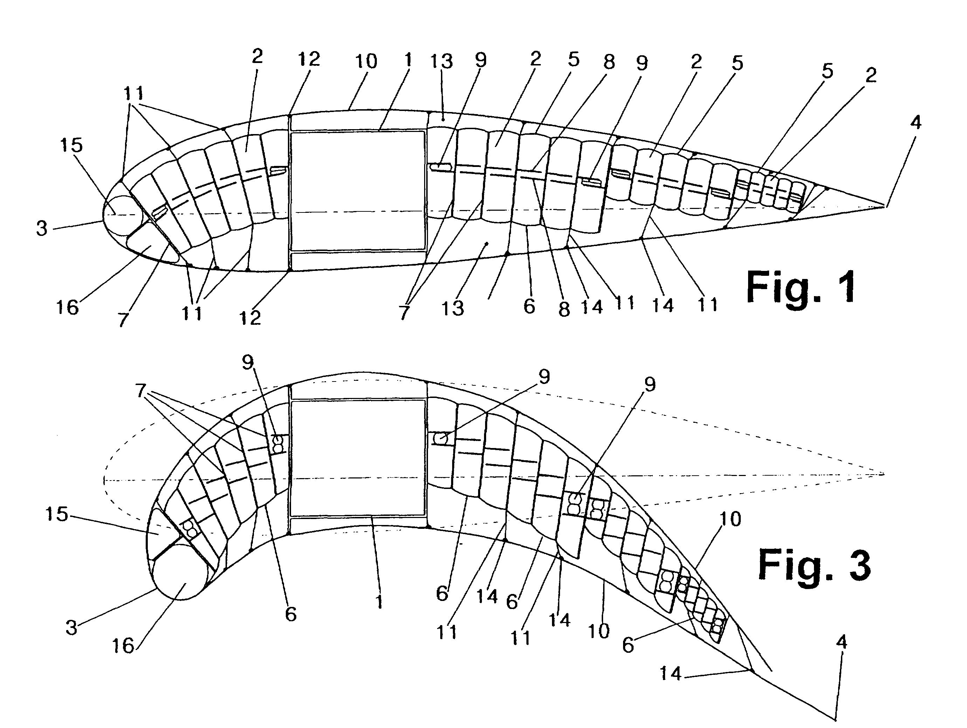

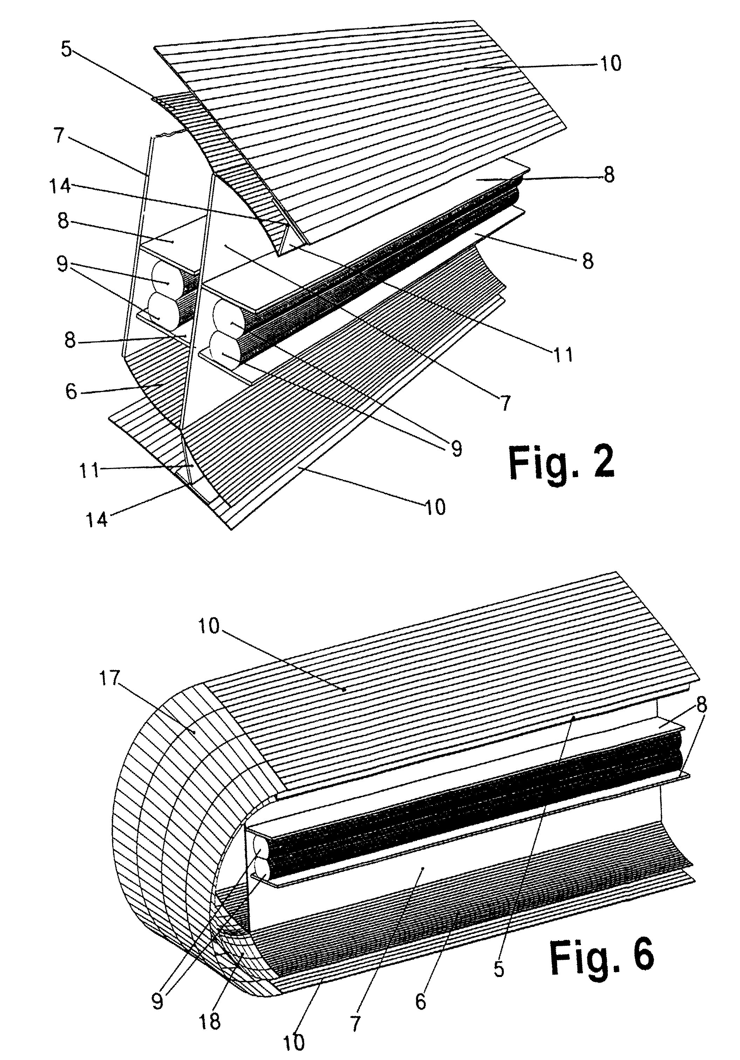

Fig. 1 ist die Darstellung eines ersten Ausführungsbeispiels des erfindungsgemässen adaptiven Flügels im Querschnitt. Mit der Ziffer 1 ist ein kastenförmiger starrer Holm bezeichnet, der die Biege- und Torsionsmomente des Flügels aufnimmt. Seitlich, nach vorne und nach hinten, an den Holm 1 schliessen sich mehrere pneumatische Module 2 an: In Fig. 1 ist dies beispielsweise ein Modul 2, das zwischen Holm 1 und der mit der Ziffer 3 belegten Anströmkante des Flügels eingebaut ist; zwischen Holm 1 und der mit der Ziffer 4 bezeichneten Abströmkante sind es beispielsweise drei Module 2. Jedes Modul 2 besteht aus je einer luftdichten Oberhaut 5 und einer ebenfalls luftdichten Unterhaut 6, wie anhand des ersten Moduls 2 hinter dem Holm 1 besonders bezeichnet. Zwischen Oberhaut 5 und Unterhaut 6 sind Platten 7 eingebaut. Diese bestehen aus einem Werkstoff, der Schubkräfte aufnehmen und weiterleiten kann, wie beispielsweise Aluminium, GFK oder CFK. Jede Platte 7 trägt auf jeder Seite eine im wesentlichen über ihre ganze Länge sich erstreckende Konsole 8 (Fig. 2 zeigt dieses Arrangement in einer perspektivischen Darstellung). Die von einer Platte 7 getragenen zwei Konsolen 8 sind in der Höhe versetzt. Das Mass dieses Versatzes ist so gewählt, dass zwischen zwei übereinanderliegenden Konsolen 8 ein bis zwei Schläuche 9 im im wesentlichen drucklosen Zustande eingelegt werden können, ohne dass sich die Platten 7 verschieben.

Die Schläuche 9 erstrecken sich wiederum je über die ganze Länge der Platten 7. Die Schläuche 9 sind luftdicht und aus einem flexiblen aber wenig dehnbaren Material gefertigt, wie zum Beispiel aus einem mit Aramidfasern armierten Elastomer. Die Schläuche 9 sind mit den Konsolen und miteinander längs ihrer Berührungslinien beispielsweise verschweisst oder verklebt. Die Platte 7, die ein Modul 2 seitlich begrenzt, kann stärker ausgeführt sein, als die dazwischen angeordneten; letztere sind beispielsweise mit Löchern, (nicht dargestellt) versehen.

Im gezeigten ersten Ausführungsbeispiel gemäss Fig. 1 sind die sich hinten an den Holm 1 anschliessenden Module 2 so angeordnet, dass deren Oberhäute 5 im wesentlichen eine zwar gewellte aber zusammenhängende Fläche bilden.

Die aerodynamische Flügeloberfläche wird gebildet aus einer verhältnismässig steifen, beispielsweise aus GFK gefertigten Folie 10, die um die mit dem Holm 1 zusammengebauten Module 2 herumgelegt ist. Die Form der Folie 10 wird definiert durch Platten 11, die sich über die ganze Länge des Flügels erstrecken und sowohl an Oberhaut 5 resp. Unterhaut 6 und der Folie 10 gelenkig in Scharnieren 14 gelagert sind. Die Platten 11 sind ebenfalls in der Lage Druckkräfte aufzunehmen und können beispielsweise, wie die Platten 7, aus Aluminium, GFK oder CFK gefertigt sind. Einzig an zwei Längslinien 12 des Holmes 1 ist die Folie direkt aber gelenkig befestigt.

Zwischen Folie 10 und dem Holm 1 und den Modulen 2 entsteht so ein Hohlraum 13, der sich auf dem äusseren Luftdruck befindet.

Die in Fig. 1 gezeigte Form erhält der Flügel durch Druckbeaufschlagung der Module 2; um etwa gleiche Steifigkeit der Module 2 hinter dem Holm 1 zu bewirken, stehen die drei Module 2 unter den Drücken

$$p_1, p_2, p_3$$

wo gilt

$$p_1 < p_2 < p_3$$

und angenähert

$$p_1 \cdot h_1 = p_2 \cdot h_2 = p_3 \cdot h_3$$

wo

$$h_1, h_2, h_3$$

die Höhen der drei Module 2 bezeichnen.

Zwischen der vordersten Platte 7 des vorderen Moduls 2 und der Anströmkante 3 sind mehrere längs der Anströmkante 3 verlaufende Schläuche eingelegt, beispielsweise ein oberer Schlauch 15 und ein unterer Schlauch 16.

Die Anzahl der Schläuche 15, 16 ist jedoch nicht auf zwei begrenzt, es ist ebenso im Sinne der Erfindung drei oder mehr solcher längsverlaufender Schläuche zu verwenden. Hinsichtlich der Materialcharakteristik entsprechen die Schläuche 15, 16 den Schläuchen 9.

In der Form des Flügels, wie sie Fig. 1 darstellt, ist der obere Schlauch 15 unter hohem Druck, der untere Schlauch 16 unter tieferem Druck aufgepumpt. Dies erteilt der Anströmkante die nötige Härte und optimale Form bei jeder Wölbung.

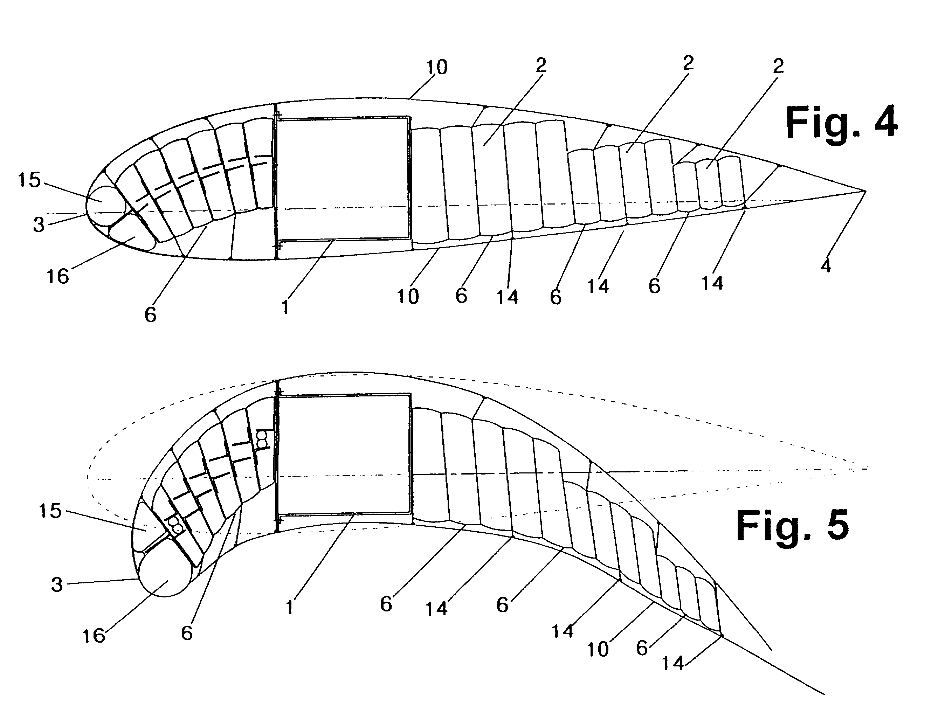

Soll nun der Flügel von der in Fig. 1 dargestellten Form in diejenige gemäss Fig. 3 übergeführt werden, so werden die Schläuche 9 zwischen den Konsolen 8 unter Druck gesetzt.

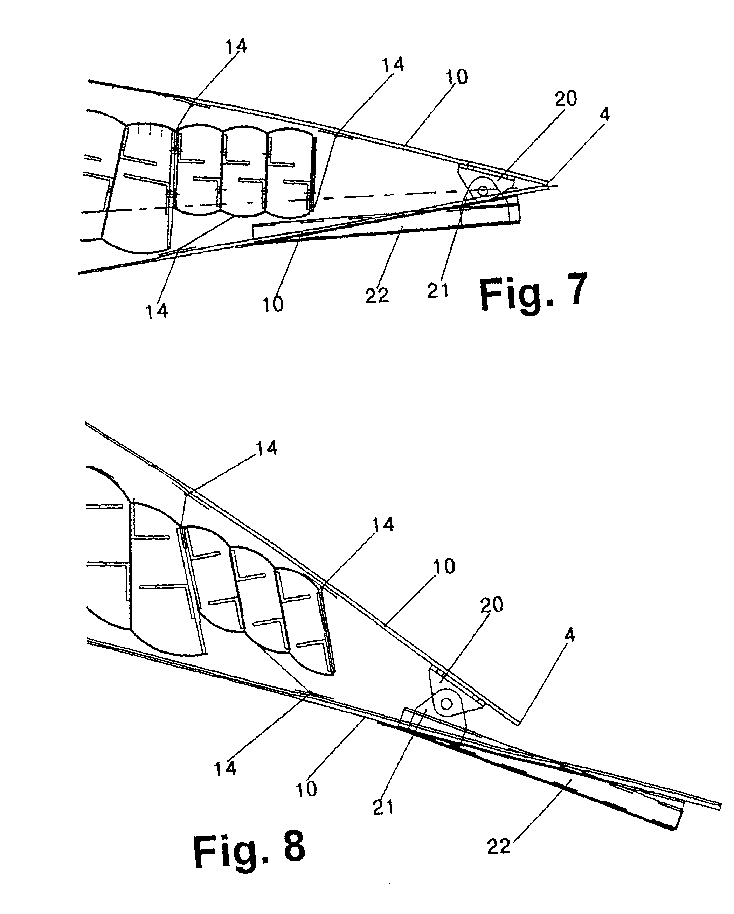

Dadurch verschieben sich die Platten 7 innerhalb eines Moduls 2 im wesentlichen parallel zueinander. Gleichzeitig wird der Druck im oberen Schlauch 15 gesenkt, im unteren Schlauch erhöht, um der Anströmkante die angestrebte aerodynamische Form zu erteilen. Die Platten 11 werden in den Scharnieren 14 geschwenkt. Die Folie 10 auf der Flügeloberseite verkürzt sich relativ zu jener auf der Flügelunterseite; die Abströmkante fällt hinsichtlich der Folie 10 auseinander. Fig. 7, 8 zeigen im Detail, wie die beiden Seiten der Folie gegeneinander geführt sind.

Zwischen den beiden Formen des Flügels gemäss Fig. 1 und 3 sind gerade erfindungsgemäss alle Zwischenformen möglich und durch geeignete Steuerung der Drücke in den Schläuchen 9, 15, 16 zu erzielen.

Ein zweites Ausführungsbeispiel stellen die Fig. 4 und 5 dar, Fig. 4 im gestreckten, Fig. 5 im stark gewölbten Zustand.

Der Unterschied zum ersten Ausführungsbeispiel gemäss Fig. 1, 3 besteht darin, dass hier die Unterhäute 6 der drei dargestellten Module 2 im wesentlichen fluchten, während das Modul 2 zwischen Holm 1 und Anströmkante 3 hier unverändert ist.

Selbstverständlich lässt sich auch dieses so anordnen, dass seine Unterhaut 6 im wesentlichen mit der Unterkante des Holms 1 fluchtet. Auch hier ist es im Sinne der Erfindung zwischen die Schläuche 15, 16 mindestens noch einen weiteren Schlauch einzufügen.

Gegenüber dem ersten Ausführungsbeispiel hat dieses den Vorteil der kleineren Beanspruchung der Scharniere 14, da die relative Längenänderung zwischen Unterhaut 6 und unterer Fläche der Folie 10 kleiner ist, als im ersten Ausführungsbeispiel.

Fig. 6 zeigt eine Ansicht von innen auf die Flügelspitze. Die Folie 10 der Flügeloberseite und der Unterseite ist verbunden mit einem bogenförmigen Stück 17 beispielsweise desselben Materials, aus welchem die Folie 10 gefertigt ist. Innerhalb des bogenförmigen Stücks 17 und ohne es zu berühren verläuft eine luftdichte Verbindungsfläche 18, die Oberhaut 5 und Unterhaut 6 nach aussen luftdicht abschliesst. Falls die Platten 7 ohne Löcher ausgeführt sind, findet der Druckausgleich durch die Oeffnung zwischen den Platten 7 und der Verbindungsfläche 18 statt. An den zwei Enden jedes Moduls 2 ist die Verbindungsfläche 18 dicht an die Platten 7 angeschlossen.

Falls der Flügel zweiteilig ausgeführt ist, ist das flugzeugseitige Ende jeder Flügelhälfte abgeschlossen, wie hier gezeigt, selbstverständlich ohne das bogenförmige Stück 17 der Folie 10, das wiederum im wesentlichen nur der aerodynamischen Form dient.

Die Schläuche 9 sind beispielsweise gegen die Flügelspitze hin abgeschlossen; erfindungsgemäss ist es jedoch, auch die Druckversorgung hier, oder redundant auch hier, vorzunehmen.

Die Fig. 7 zeigt die Abströmkante des Flügels in gestreckter Stellung, Fig. 8 in gewölbter. Eine Vorrichtung, die an der Abströmkante in geeigneten Abständen in einer Vielzahl angebracht ist, sorgt dafür, dass die Kräfte von der Unterseite der Folie 10 auf deren Oberseite übertragen werden und umgekehrt. Ferner wird durch die Vorrichtung die Abstandsrelation zwischen den zwei Seiten der Folie 10 definiert. Die genannte Vorrichtung weist beispielsweise ein innen an der Oberseite der Folie 10 befestigtes Scharnier 20 auf mit einem Gegenstück 21, das in einer geeignet geformten Schiene 22 gleiten kann. Die Schiene 22 ist an der zu ihrer Aufnahme eingeschnittenen Unterseite der Folie 10 befestigt. Wird der Flügel durch Drucksteigerung in den Schläuchen 9 gewölbt, so gleitet das Gegenstück 21 in der Schiene 22 nach vorne, das Scharnier 20 und sein Gegenstück 21 führen gleichzeitig eine Schwenkbewegung aus.

Die Folie 10 - sowohl auf der Oberseite des Flügels, wie auch auf seiner Unterseite - kann im Bereich der Abströmkante 4 bis mindestens zum letzten Scharnier 14 verstärkt ausgeführt sein, um ihr die nötige Steifigkeit zu erteilen. Diese beschriebene Vorrichtung zum definierten Verbinden der Ober- und Unterseite der Folie 10 im Bereich der Abströmkante 4 kann, obwohl anhand des ersten Ausführungsbeispiels dargestellt, ohne weiteres auch beim zweiten Ausführungsbeispiel eingesetzt werden.

Selbstverständlich ist auch ein Umkehren der Vorrichtung erfinderisch in dem Sinne, dass das Scharnier 20 an der Unterseite, sein Gegenstück und die Schiene 22 an der Oberseite der Folie 10 befestigt sind. Erfindungswesentlich ist die Realisierung einer gekoppelten Bewegung aus Drehung und Verschiebung.

Die Schläuche 9 sind in den Fig. 4, 7, 8 ganz, in den Fig. 1, 3, 5 teilweise weggelassen, sind aber erfindungsgemäss überall vorhanden und lassen sich mit Hilfe von Fig. 2 leicht überall ergänzen.

Die relative Lage der Platten 7 in der gestreckten Stellung des Flügels in Bezug auf beide Ausführungsbeispiele wurde hier nicht besonders angesprochen. Ausgehend von einer im wesentlichen parallelen Anordnung der Platten 7 - je nach der angestrebten Flügelform im gebogenen Zustand - kann sie leicht konvergent oder leicht divergent nach unten variiert werden, wobei mit "leicht" eine Abweichung von der Parallelität um einige Winkelgrade bedeutet. Die Nichtparallelität kann sich durchaus auch auf ein einziges Paar von Platten 7 beschränken, wie beim zweiten Ausführungsbeispiel anschliessend hinter dem Holm 1. Sie kann auch ein ganzes Modul 2 umfassen, wie das vordere Modul 2 zwischen Holm 1 und Anströmkante 3. Aus praktischen Ueberlegungen kann die Abweichung von der Parallelität zweier Platten auf <30° beschränkt werden und ist in den meisten Fällen wesentlich kleiner.

Die verfahrensmässige Einstellung aller genannten Drücke kann manuell vorgenommen werden. Anderseits ist es im Erfindungsgedanken enthalten, das Mass der Wölbung durch einen einzigen Zahlwert zu charakterisieren und die dazugehörigen Drücke durch eine Programmsteuerung anfahren, überwachen und konstant halten zu lassen.

**Patentansprüche**

1. Pneumatischer, teilweise mit Druckluft zu beaufschlagender adaptiver und in seiner Wölbung veränderlicher Flügel mit Anströmkante (3) und Abströmkante (4) mit einem kastenförmigen Holm (1), dadurch gekennzeichnet, dass

   - zwischen Anströmkante (3) und Holm (1) mindestens ein mit Druckluft zu beaufschlagendes und in seiner Form durch Anwendung von Druckluft veränderliches Modul (2) eingebaut und mindestens mittelbar am Holm (1) befestigt ist,
   - zwischen der Abströmkante (4) und Holm (1) mindestens ein mit Druckluft zu beaufschlagendes und in seiner Form durch Anwendung von Druckluft veränderliches Modul (2) eingebaut und mindestens mittelbar am Holm (1) befestigt ist,
   - jedes Modul (2) sich über die ganze Länge einer Flügelhälfte erstreckt und aufgebaut ist aus

     - einer Vielzahl von nebeneinander angeordneten Platten (7),
     - druckluftbetätigten Mitteln, um die Platten (7) im wesentlichen parallel zueinander zu verschieben,
     - einer luftdichten Oberhaut (5), die in geeigneten Abständen an den Platten (7) befestigt ist,
     - einer luftdichten Unterhaut (6), die in geeigneten Abständen an den Platten (7) befestigt ist,
     - einer Verbindungsfläche (18), die mindestens an den Flügelspitzen Oberhaut (5) und Unterhaut (6) verbindet und an den Begrenzungen jedes Moduls (2) mit der dieses abschliessenden Platte (7) luftdicht verbunden ist,

   - jedes Modul (2) sowohl gegen aussen, als auch gegen das benachbarte Modul (2) luftdicht abgeschlossen und über eine Druckluftleitung mit einer Druckluftspeisung verbunden ist,
   - eine Folie (10) vorhanden ist, welche die aerodynamische Aussenfläche des Flügels definiert und gelenkig sowohl mit dem Holm (1) als auch, über sich längs des Flügels erstreckende Platten (11) mit Gelenken (14), mit den Modulen (2) verbunden ist,
   - zwischen der vordersten Platte (7) des vordersten Moduls (2) und der durch die Folie (10) gebildeten Anströmkante (3) mindestens zwei sich längs des Flügels erstreckende Schläuche (15, 16) eingelegt sind, welche aus einem luftdichten, flexiblen, aber wenig dehnbaren Material gefertigt sind und individuell mit Druckluft beaufschlagt werden können.

2. Adaptiver Flügel nach Patentanspruch 1, dadurch gekennzeichnet, dass

   - jede Platte (7) eines Moduls (2) auf jeder ihrer Seiten je eine sich über ihre ganze Länge sich erstrekkende Konsole (8) aufweist,
   - die beiden Konsolen (8) in der Höhe versetzt sind,
   - mindestens ein sich über die ganze Länge der Konsolen (8) sich erstreckender Schlauch (9) vorhanden ist, gefertigt aus luftdichtem, flexiblem, aber wenig dehnbaren Material,

- der mindestens eine Schlauch (9) zwischen die in der Höhe versetzten Konsolen (8) zweier benachbarter Platten (7) eingelegt und an jeder Konsole (8) entlang einer Längslinie befestigt ist, so dass.bei Druckerhöhung in den Schläuchen (9) die beiden Konsolen (8) und die sie tragenden Platten (7) parallel zu einander verschoben werden.
- jedes Modul für sich mit Druckluft beaufschlagt werden kann.

3. Adaptiver Flügel nach Patentanspruch 2, dadurch gekennzeichnet, dass zwischen zwei Konsolen (8) je ein Schlauch (9) eingelegt ist.

4. Adaptiver Flügel nach Patentanspruch 2, dadurch gekennzeichnet, dass zwischen zwei Konsolen (8) je zwei Schläuche (9) eingelegt sind.

5. Adaptiver Flügel nach Patentanspruch 1, dadurch gekennzeichnet, dass die Platten (7) eines Moduls (2) im Wesentlichen parallel zueinander angeordnet sind.

6. Adaptiver Flügel nach Patentanspruch 1, dadurch gekennzeichnet, dass die Platten (7) innerhalb eines Moduls(2) so angeordnet sind, dass die Richtungen zweier benachbarter Platten höchstens 30° von der Parallelität abweicht.

7. Adaptiver Flügel nach Patentanspruch 1 und 2 und einem der Patentansprüche 3 bis 6, dadurch gekennzeichnet, dass hinter dem Holm (1) mindestens zwei Module (2) angeordnet sind.

8. Adaptiver Flügel nach Patentanspruch 7, dadurch gekennzeichnet, dass die Module (2), die hinter dem Holm (1) befestigt sind, so angeordnet sind, dass ihre Oberhäute (5) im wesentlichen fluchten.

9. Adaptiver Flügel nach Patentanspruch 7, dadurch gekennzeichnet, dass die Module (2), die hinter dem Holm (1) befestigt sind, so angeordnet sind, dass ihre Unterhäute (6) im wesentlichen fluchten.

10. Adaptiver Flügel nach Patentanspruch 8 oder 9, dadurch gekennzeichnet, dass er Mittel aufweist, die mittels kombinierter Schwenk- und Translationsbewegung die hinteren Kanten der oberen und unteren Fläche der Folie (10) im Bereich der Abströmkante (4) kräftemässig verbinden und deren Abstandsrelation definieren können.

11. Adaptiver Flügel nach Patentanspruch 10, dadurch gekennzeichnet, dass die Mittel darin bestehen, dass im Bereich der Abströmkante (4)

- die Folie (10) auf der Innenseite ihrer oberen Fläche eine Vielzahl von Scharnieren (20) trägt, die mit Gegenstücken (21) auf der Innenseite der unteren Fläche korrespondieren,
- die untere Fläche der Folie (10) eine gleiche Vielzahl von Schienen (22) eingelassen trägt, in denen die Gegenstücke (21) in Längsrichtung gleiten können, so dass bei Wölbung des Flügels die hinteren Kanten der Folie (10) im Bereich der Abströmkante (4) kräftemässig und lagemässig verbunden bleiben.

12. Adaptiver Flügel nach Patentanspruch 10, dadurch gekennzeichnet, dass die Mittel darin bestehen, dass im Bereich der Abströmkante (4)

- die Folie (10) auf der Innenseite ihrer unteren Fläche eine Vielzahl von Scharnieren (20) trägt, die mit Gegenstücken (21) auf der Innenseite der oberen Fläche korrespondieren,
- die obere Fläche der Folie (10) eine gleiche Vielzahl von Schienen (22) eingelassen trägt, in denen die Gegenstücke (21) in Längsrichtung gleiten können, so dass bei Wölbung des Flügels die hinteren Kanten der Folie (10) im Bereich der Abströmkante (4) kräftemässig und lagemässig verbunden bleiben.

13. Adaptiver Flügel nach Patentanspruch 11 oder 12, dadurch gekennzeichnet, dass

- Mittel vorhanden sind, um die Module (2) mit Druckluft zu beaufschlagen,
- Mittel vorhanden sind, um die Drücke $p_1$, $p_2$,... $p_n$ in den Modulen (2) mit den Höhen $h_1$, $h_2$,... $h_n$ so zu steuern, dass im wesentlichen gilt:

$$p_1 \cdot h_1 = p_2 \cdot h_2 = p_n \cdot h_n.$$

14. Adaptiver Flügel nach Patentanspruch 13, dadurch gekennzeichnet, dass Mittel vorhanden sind, mit welchen die einzelnen Drücke manuell eingestellt werden können.

15. Adaptiver Flügel nach Patentanspruch 13, dadurch gekennzeichnet, dass Mittel vorhanden sind, mit welchen durch Vorgabe einer gewählten Wölbung die dieser Wölbung entsprechenden einzelnen Drücke des Flügels programmge-steuert angefahren werden können.

**Claims**

1. An adaptive pneumatic wing, partly inflatable with compressed air and changeable in its shape, with a leading edge (3) and a trailing edge (4) with a box shaped spar (1), characterised in that

- between the leading edge (3) and the spar (1) at least one module (2), inflatable with compressed air and changeable in its shape by the application of compressed air, is built in and is fastened at least indirectly to the spar (1),
- between the trailing edge (4) and the spar (1) at least one module (2) inflatable with compressed air and changeable in its shape by the application of compressed air, is built in and is fastened at least indirectly to the spar (1),
- each module (2) extends over the entire length of a wing half and is constructed from

  - a multiplicity of plates (7) arranged one beneath the other,
  - compressed air actuated means, to move the plates (7) essentially parallel to each other,
  - an airtight upper skin (5), which is fastened to the plates (7) at suitable intervals,
  - an airtight lower skin (6), which is fastened to the plates (7) at suitable intervals,
  - a connecting surface (18), which at least at the wing tips joins the upper skin (5) and the lower skin (6), and is joined airtight at the borders of each module (2) to the plate (7) at its end,

- each module (2) is sealed airtight both against the outside and also against the adjacent module (2) and joined via a compressed air line to a compressed air feed,
- a foil (10) is present, which defines the aerodynamic outer surface of the wing and is joined both to the spar (1) and also, via plates (11) extending along the wing with hinge joints (14), to the modules (2),
- between the foremost plate (7) of the foremost module (2) and the leading edge (3) formed by the foil (10) at least two tubes (15, 16) are laid in, extending along the wing, which are manufactured from an airtight, flexible, but low-stretch material and can be individually inflated with compressed air.

2. An adaptive wing according to Claim 1, characterised in that

- each plate (7) of a module (2) has on each of its sides a console (8) extending over its entire length,
- the two consoles (8) are displaced in height,
- at least one tube (9), made of airtight, flexible, but low-stretch material, is present extending over the entire length of the console (8),
- the at least one tube (9), laid in between the height displaced consoles (8) of two adjacent plates (7), is fastened along a longitudinal line to each console (8), so that with an increase in pressure in the tubes (9) the two consoles (8) and the plates (7) are moved parallel to each other,
- each module (2) in itself can be inflated with compressed air.

3. An adaptive wing according to Claim 2, characterised in that between two consoles (8) a tube (9) is laid in, in each case.

4. An adaptive wing according to Claim 2, characterised in that between two consoles (8) two tubes (9) are laid in, in each case.

5. An adaptive wing according to Claim 1, characterised in that the plates (7) of a module (2) are arranged essentially parallel to each other.

6. An adaptive wing according to Claim 1, characterised in that the plates (7) within a module (2) are so arranged that the directions of two adjacent plates deviate from the parallel at the most by 30°.

7. An adaptive wing according to Claim 1 and Claim 2 and one of the Claims 3 to 6, characterised in that at least two modules (2) are arranged behind the spar (1).

8. An adaptive wing according to Claim 7, characterised in that the modules (2), which are fastened behind the spar (1), are so arranged that their upper skins (5) are essentially aligned.

9. An adaptive wing according to Claim 7, characterised in that the modules (2), which are fastened behind the spar (1), are so arranged that their lower skins (6) are essentially aligned.

10. An adaptive wing according to Claim 8 or Claim 9, characterised in that it has means, which positively join the rear edges of the upper and lower surfaces of the foil (10) in the region of the trailing edge (4), using combined pivoting and sliding movements, and which can define their separation relationship.

11. An adaptive wing according to Claim 10, characterised in that the means comprise in that, in the region of the trailing edge (4)

- the foil (10) on the inside of its upper surface carries a multiplicity of hinge joints (20), which correspond with mating pieces (21) on the inside of the lower surface,
- the lower surface of the foil (10) has an equal number of rails (22) set into it, in which the mating pieces (21) can slide in the longitudinal direction, so that in arching of the wing the trailing edges (4) of the foil (10) remain positively joined and in position.

**12.** An adaptive wing according to Claim 10, characterised in that the means comprise in that, in the region of the trailing edge (4)

- the foil (10) on the inside of its lower surface carries a multiplicity of hinge joints (20), which correspond with mating pieces (21) on the inside of the upper surface,
- the upper surface of the foil (10) has an equal number of rails (22) set into it, in which the mating pieces (21) can slide in the longitudinal direction, so that in arching of the wing the trailing edges (4) of the foil (10) remain positively joined and in position.

**13.** An adaptive wing according to Claim 11 or Claim 12, characterised in that

- means are provided to impact the modules (2) with pressurised air,
- means are provided to control the pressures $p_1$, $p_2$,...$p_n$ in the modules (2) with the heights $h_1$, $h_2$,... $h_n$ such that essentially

$$p_1 \cdot h_1 = p_2 \cdot h_2 = p_n \cdot h_n.$$

**14.** An adaptive wing according to Claim 13, characterised in that means are provided to adjust the individual pressures manually.

**15.** An adaptive wing according to Claim 13, characterised in that means are provided by which, after input of the selected arching of the wing, the individual pressures complying with this arching may be adjusted under programmed control.

**Revendications**

**1.** Aile pneumatique adaptable, apte à être contrainte en partie avec de l'air comprimé et à courbure variable, présentant un bord marginal intérieur (3) et un bord marginal extérieur (4) avec un longeron en forme de caisson (1), caractérisée en ce que :

- au moins un module (2) qui est apte à être contraint avec de l'air comprimé et dont la forme est variable grâce à l'application d'air comprimé est monté entre le bord marginal intérieur (3) et le longeron (1) et est fixé au moins indirectement au longeron (1),
- au moins un module (2) qui est apte à être contraint avec de l'air comprimé et dont la forme est variable grâce à l'application d'air comprimé est monté entre le bord marginal extérieur (4) et le longeron (1) et est fixé au moins indirectement au longeron (1),

- chaque module (2) s'étend sur toute la longueur d'une moitié d'aile et se compose

    - de plusieurs plaques (7) juxtaposées,
    - de moyens actionnés par air comprimé pour déplacer les plaques (7) globalement parallèlement les unes aux autres,
    - d'un revêtement supérieur (5) étanche à l'air qui est fixé aux plaques (7) avec des écartements adéquats,
    - d'un revêtement inférieur (6) étanche à l'air qui est fixé aux plaques (7) avec des écartements adéquats, et
    - d'une surface de liaison (18) qui relie les revêtements supérieur (5) et inférieur (6) au moins au niveau des pointes de l'aile et qui, au niveau des limites de chaque module (2), est reliée de manière étanche à l'air à la plaque (7) qui obture ledit module (2),

- chaque module (2) est fermé de manière étanche à l'air aussi bien par rapport à l'extérieur que par rapport au module (2) voisin, et est relié par l'intermédiaire d'une conduite d'air comprimé à une alimentation en air comprimé,
- il est prévu une feuille (10) qui définit la surface extérieure aérodynamique de l'aile et qui est reliée de manière articulée aussi bien au longeron (1) qu'aux modules (2), grâce à des plaques (11) qui s'étendent le long de l'aile et qui sont pourvues d'articulations (14), et
- entre la plaque (7) avant du module (2) avant et le bord marginal intérieur (3) formé par la feuille (10) sont placés au moins deux tuyaux (15, 16) qui s'étendent le long de l'aile, qui se composent d'un matériau étanche à l'air, flexible mais peu extensible, et qui peuvent être contraints individuellement avec de l'air comprimé.

**2.** Aile adaptable selon la revendication 1, caractérisée en ce que :

- chaque plaque (7) d'un module (2) présente sur chaque côté une console (8) qui s'étend sur toute sa longueur,
- les deux consoles (8) sont décalées en hauteur,
- il est prévu au moins un tuyau (9) qui s'étend sur toute la longueur des consoles (8) et qui se compose d'un matériau étanche à l'air, flexible mais peu extensible,
- le ou les tuyaux (9) sont placés entre les consoles (8), décalées en hauteur, de deux plaques (7) voisines et sont fixés à chaque console (8) le long d'une ligne longitudinale, de sorte que lors d'une augmentation de pression dans les tuyaux (9), les deux consoles (8) et les plaques (7) qui les portent sont déplacées parallèlement les unes aux autres, et

- chaque module peut être contraint individuellement avec de l'air comprimé.

3. Aile adaptable selon la revendication 2, caractérisée en ce qu'un tuyau (9) est placé à chaque fois entre deux consoles (8).

4. Aile adaptable selon la revendication 2, caractérisée en ce que deux tuyaux (9) sont placés à chaque fois entre deux consoles (8).

5. Aile adaptable selon la revendication 1, caractérisée en ce que les plaques (7) d'un module (2) sont globalement parallèles.

6. Aile adaptable selon la revendication 1, caractérisée en ce que les plaques (7) sont disposées à l'intérieur d'un module (2) de telle sorte que les directions de deux plaques voisines s'écartent du parallélisme de 30° maximum.

7. Aile adaptable selon les revendications 1 et 2 et selon les revendications 3 à 6, caractérisée en ce qu'au moins deux modules (2) sont disposés derrière le longeron (1) .

8. Aile adaptable selon la revendication 7, caractérisée en ce que les modules (2) qui sont fixés derrière le longeron (1) sont disposés de telle sorte que leurs revêtements supérieurs (5) soient globalement alignés.

9. Aile adaptable selon la revendication 7, caractérisée en ce que les modules (2) qui sont fixés derrière le longeron (1) sont disposés de telle sorte que leurs revêtements inférieurs (6) soient globalement alignés.

10. Aile adaptable selon la revendication 8 ou 9, caractérisée en ce qu'elle comporte des moyens qui peuvent relier, pour ce qui est des forces, les bords arrière des surfaces supérieure et inférieure de la feuille (10) dans la zone du bord marginal extérieur (4) à l'aide d'un mouvement de pivotement et d'un mouvement de translation combinés, et qui peuvent définir la relation d'écartement de ces surfaces.

11. Aile adaptable selon la revendication 10, caractérisée en ce que lesdits moyens résident dans le fait que dans la zone du bord marginal extérieur (4),

- la feuille (10) porte sur le côté intérieur de sa surface supérieure plusieurs charnières (20) qui coopèrent avec des éléments opposés (21) prévus sur le côté intérieur de la surface inférieure, et
- dans la surface inférieure de la feuille (10) est encastré un nombre égal de rails (22) dans lesquels les éléments opposés (21) peuvent coulisser dans le sens longitudinal, de sorte que quand l'aile est courbée, les bords arrière de la feuille (10) restent reliés, en ce qui concerne les forces et la position, dans la zone du bord marginal extérieur (4).

12. Aile adaptable selon la revendication 10, caractérisée en ce que lesdits moyens résident dans le fait que dans la zone du bord marginal extérieur (4),

- la feuille (10) porte sur le côté intérieur de sa surface inférieure plusieurs charnières (20) qui coopèrent avec des éléments opposés (21) prévus sur le côté intérieur de la surface supérieure, et
- dans la surface supérieure de la feuille (10) est encastré un nombre égal de rails (22) dans lesquels les éléments opposés (21) peuvent coulisser dans le sens longitudinal, de sorte que quand l'aile est courbée, les bords arrière de la feuille (10) restent reliés, en ce qui concerne les forces et la position, dans la zone du bord marginal extérieur (4).

13. Aile adaptable selon la revendication 11 ou 12, caractérisée en ce que :

- il est prévu des moyens pour contraindre les modules (2) avec de l'air comprimé, et
- il est prévu des moyens pour commander les pressions $p_1$, $p_2$,...$p_n$ dans les modules (2), qui présentent les hauteurs $h_1$, $h_2$,...$h_n$, de telle sorte qu'on ait dans l'ensemble :

$$p_1 \cdot h_1 = p_2 \cdot h_2 = p_n \cdot h_n.$$

14. Aile adaptable selon la revendication 13, caractérisée en ce qu'il est prévu des moyens grâce auxquels les pressions individuelles peuvent être réglées manuellement.

15. Aile adaptable selon la revendication 13, caractérisée en ce qu'il est prévu des moyens grâce auxquels, en prédéfinissant une courbure choisie, on peut mettre en place avec une commande par programme les pressions individuelles de l'aile correspondant à cette courbure.

Fig. 1

Fig. 3

Fig. 2

Fig. 6

Fig. 4

Fig. 5

EP 0 983 188 B1

Fig. 7

Fig. 8